# EUROPÄISCHE PATENTSCHRIFT

(11) **EP 2 521 827 B1**
(45) Veröffentlichungstag und Bekanntmachung des Hinweises auf die Patenterteilung: **09.04.2014**
(21) Anmeldenummer: 10803364.8
(22) Anmeldetag: 03.12.2010
(51) Int. Cl.: E04C 3/08, E04C 5/065, F16B 7/00, E04C 3/04

(54) **VERBINDUNGSANORDNUNG VON UNTER AXIALDRUCK STEHENDEN HOHLPROFILEN AUS STAHL**
CONNECTION ARRANGEMENT OF HOLLOW STEEL SECTIONS SUBJECT TO AXIAL PRESSURE
DISPOSITIF POUR RACCORDER DES PROFILÉS CREUX EN ACIER SUBISSANT L'ACTION D'UNE PRESSION AXIALE

(30) Priorität: 04.01.2010 DE 102010004155
(43) Veröffentlichungstag der Anmeldung: 14.11.2012
(73) Patentinhaber: Vallourec Deutschland GmbH, 40472 Düsseldorf (DE)
(72) Erfinder: HERION, Stefan, 76768 Berg (DE); JOSAT, Ole, 51375 Leverkusen (DE)
(74) Vertreter: Meissner, Peter E.
(86) Internationale Anmeldenummer: PCT/DE2010/001432
(87) Internationale Veröffentlichungsnummer: WO 2011/079832

(56) Entgegenhaltungen:
- WO-A1-01/14658
- WO-A2-2006/074439
- CH-A- 343 717
- DE-A1- 2 403 832
- DE-A1- 19 805 653
- GB-A- 1 223 050
- US-A- 4 442 650
- US-A1- 2003 217 521

## Beschreibung

Die Erfindung betrifft eine Fachwerkkonstruktion gemäß dem Oberbegriff des Patentanspruchs 1.

Unter Axialdruck stehende Hohlprofile aus Stahl werden beispielsweise bei Fachwerkkonstruktionen eingesetzt, die u. a. für vorgefertigte Tragsysteme als Dachkonstruktionen verwendet werden und aus der DE 10 2006 010 951 A1 bekannt sind.

Das hier dargestellte Tragsystem für Dachkonstruktionen aus Stahl, welches auch unter dem Namen "PREON"^{®} angeboten wird, zeichnet sich insbesondere durch seine Variabilität in der Anpassung an unterschiedliche Spannweiten aus. Realisiert wird diese Variabilität durch eine Standardisierung und Modularisierung der Bauweise und erfordert nur noch eine Typenstatik.

Derartige Tragsysteme für Fachwerkkonstruktionen bestehen aus verschiedenen miteinander verbundenen als Hohlprofile ausgebildeten Tragelementen, die entsprechend ihrer Belastung Zug-, Druck- oder Biegebeanspruchungen ausgesetzt sind. Diese Tragprofile sind als Ober- bzw. Untergurt und Diagonalstreben unterschiedlicher Länge ausgeführt, die anschließend über Knotenverbindungen miteinander verbunden werden.

Die Länge der einzelnen Tragelemente ist aus liefer- oder auch produktionstechnischen Gründen beschränkt, so dass diese zur Herstellung der für die Fachwerkkonstruktionen erforderlichen Längen fallweise zu Mehrfachlängen verbunden werden müssen.

Die Knotenverbindungen der Tragelemente werden dabei mittels Kopfplattenanschlüssen realisiert, die üblicherweise durch Verschweißen und mittels mechanischer Verbindungselemente, wie Schrauben oder Nieten, hergestellt werden.

Diese Verbindungstechniken sind aufwendig und teuer und bei ausschließlich axial auf Druck beanspruchten Verbindungen nicht erforderlich und daher unwirtschaftlich.

Der Erfindung liegt die Aufgabe zugrunde, eine Verbindung von unter Axialdruck stehenden Hohlprofilen anzugeben, die ohne die Nachteile bekannter Verbindungen kostengünstig und schnell montierbar herzustellen ist.

Diese Aufgabe wird mit den Merkmalen des Anspruches 1 gelöst. Vorteilhafte Weiterbildungen sind jeweils Gegenstand von Unteransprüchen.

Nach der Lehre der Erfindung wird zur Lösung dieser Aufgabe die druckbeanspruchte Knotenverbindung als lösbare formschlüssige Steckverbindung ausgeführt. Diese Steckverbindung weist bei nur auf Axialdruck beanspruchten Knotenverbindungen, beispielsweise bei Fachwerkkonstruktionen, wesentliche Vorteile gegenüber den bislang üblichen Schweiß-, Schraub- und Nietverbindungen auf.

Da die Verbindungen nur axial auf Druck beansprucht werden, ist es aus statischer Sicht ausreichend, die erforderlichen Längen der Diagonalelemente über eine einfache Steckverbindung von ineinander gesteckten Hohlprofilen zu realisieren. Hierdurch ist die Montage der Fachwerkkonstruktion deutlich einfacher, schneller und damit wirtschaftlicher.

Zur Herstellung der Steckverbindungen weisen die Hohlprofile der Diagonalstreben in einer ersten Ausführungsform an einem Ende des einen Teils der Diagonalstrebe einen vergrößerten Durchmesser auf, wobei das darin einzusteckende Ende des anderen Teils der Diagonalstrebe im Durchmesser konstant belassen ist.

In einer zweiten Ausführungsform ist für die Herstellung der Steckverbindung ein Ende eines Teils der Diagonalstrebe im Durchmesser reduziert und das darauf aufzusteckende Ende des anderen Teils der Diagonalstrebe bleibt im Durchmesser konstant.

Eine weitere vorteilhafte Ausgestaltung der Erfindung sieht vor, die Verbindung mittels einer mit einer Aufweitung und Verjüngung versehenen separaten Muffe herzustellen, so dass die Hohlprofile mit konstantem Durchmesser gefertigt werden können. Die Muffe wird dabei in ein Ende des Hohlprofils eingesteckt und auf das Ende des anderen Hohlprofils aufgesteckt.

Vorteil hierbei ist, dass die Muffen als kostengünstige Standardelemente gefertigt werden können. Denkbar sind jedoch auch Muffen, deren Enden jeweils auf die Enden der Hohlprofile auf- oder in die Enden hineingesteckt werden.

In einer vorteilhaften Ausgestaltung der Erfindung ist die Steckverbindung mit einer Sicherung gegen unbeabsichtigtes Lösen versehen. Dies kann beispielsweise ein Klebstoff, Mörtel oder ein Verspannelement, wie z. B. ein Keil oder Spannring, sein.

Die Hohlprofile der Tragelemente sind erfindungsgemäß aus warmgefertigten, nahtlosen Rohren hergestellt, es sind jedoch grundsätzlich auch Hohlprofile aus geschweißten, kalt- oder warmgefertigten Rohren einsetzbar.

Wenngleich die Erfindung am Beispiel einer Fachwerkkonstruktion beschrieben wird, ist sie jedoch grundsätzlich auch im Stahlhoch- und Maschinenbau oder im Fassadenbau einsetzbar, immer dort wo allein auf Druck beanspruchte Verbindungen aus Rohren bzw. Hohlprofilen hergesellt werden sollen.

Nachfolgend wird die Erfindung anhand einer Figur näher erläutert.

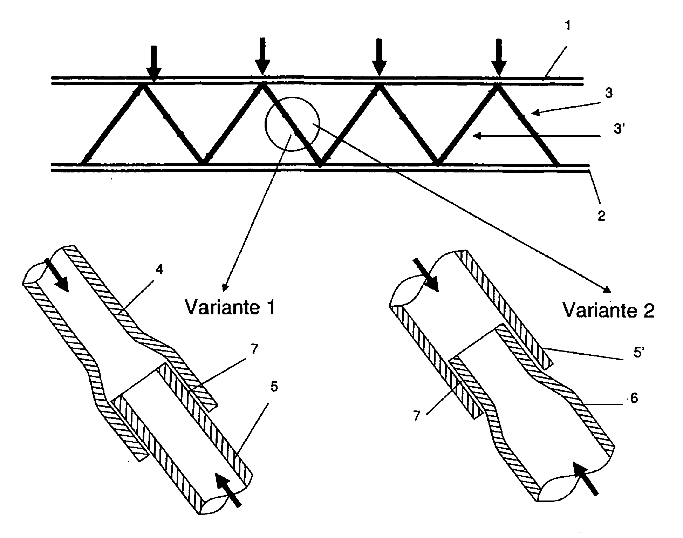

Die Figur zeigt im oberen Teilbild eine erfindungsgemäß aus Hohlprofilen hergestellte Fachwerkkonstruktion mit einem Obergurt 1, einem Untergurt 2 sowie Diagonalstreben 3, 3' als Tragelemente. Die Tragelemente selbst bestehen aus nahtlos warmgewalzten Hohlprofilen, die entsprechend der geforderten Länge miteinander zu Mehrfachlängen verbunden werden.

Bei unter Last stehendem Fachwerk (siehe Lastpfeile) verhalten sich die Diagonalstreben 3, 3' als Druck- 3 bzw. Zugstab 3'. Bei wegen der erforderlichen Länge geteilten Diagonalstreben 3, 3' sind die Verbindungen der nur axial auf Druck beanspruchten Streben 3 erfindungsgemäß als formschlüssige Steckverbindung ausgeführt. Die anderen Tragelemente der Fachwerkkonstruktion werden dagegen in üblicher Weise mit angeschweißten Kopfplattenanschlüssen (hier nicht dargestellt) miteinander verbunden, so dass Zugbeanspruchungen von der Verbindung aufgenommen werden können.

Im unteren Teilbild der Figur sind zwei Beispiele für Lösungen als formschlüssige Steckverbindungen dargestellt.

Die unter axialer Druckbeanspruchung stehenden Diagonalstreben 3 bestehen in einer ersten Ausführungsform (Variante 1, Teilbild unten links) wegen der erforderlichen Länge aus zwei Teilstücken 4, 5. Das Teilstück 4 weist an einem Ende einen vergrößerten Durchmesser auf, der so bemessen ist, dass das darin einzusteckende Ende des Teilstücks 5 der Diagonalstrebe 3 formschlüssig aufgenommen werden kann.

Zur Sicherung gegen unbeabsichtigtes Lösen der Verbindung ist die Verbindung mit einem Klebstoff oder Mörtel oder Ähnlichem 7 fixiert.

In einer zweiten Ausführungsform der Steckverbindung (Variante 2, Teilbild unten rechts) ist die Diagonalstrebe 3 in Teilstücke 5', und 6 unterteilt. In dieser Variante ist das Teilstück 6 an dem einen Ende im Durchmesser reduziert und formschlüssig eingesteckt in das Teilstück 5', welches durchgängig einen konstanten Durchmesser aufweist. Auch diese Verbindung ist gegen unbeabsichtigtes Lösen mit Klebstoff oder Mörtel oder ähnlich gesichert.

Durch das Einbringen von Klebstoff, Mörtel, Verspannelementen oder Ähnlichem ist zusätzlich die Übertragung von Momenten (sowohl Biege- als auch Torsionsmomente) möglich.

### Bezugszeichenliste

| **Nr.** | **Bezeichnung** |
|---|---|
| 1 | Obergurt |
| 2 | Untergurt |
| 3, 3' | Diagonalstrebe |
| 4 | Teilstück mit vergrößertem Durchmesser des Hohlprofilendes |
| 5, 5' | Teilstück mit konstantem Durchmesser des Hohlprofilendes |
| 6 | Teilstück mit verringertem Durchmesser des Hohlprofilendes |
| 7 | Klebstoff |

## Patentansprüche

1. Fachwerkkonstruktion mit Verbindungsanordnung von Hohlprofilen aus Stahl als Tragelemente, bestehend aus Obergurt (1), Untergurt (2) und Diagonalstreben (3, 3'), **dadurch gekennzeichnet, dass** mindestens die Diagonalstreben (3) aus Teilstücken (4, 5, 5', 6) bestehen, die mittels Knotenverbindung miteinander verbunden sind und unter Belastung einer axialen Druckbeanspruchung ausgesetzt sind und die Knotenverbindung der Diagonalstreben (3) als lösbare, formschlüssige Steckverbindung ausgeführt ist, wobei die Teilstücke (4, 5, 5', 6) ineinander steckbar ausgeführt sind.

2. Fachwerkkonstruktion nach Anspruch 1,
**dadurch gekennzeichnet,**
**dass** für die Herstellung der Steckverbindung ein Ende des Teilstücks (4) einen vergrößerten Durchmesser und das darin formschlüssig einzusteckende Ende des Teilstücks (5) im Durchmesser konstant belassen ist.

3. Fachwerkkonstruktion nach Anspruch 2,
**dadurch gekennzeichnet,**
**dass** für die Herstellung der Steckverbindung ein Ende des Teilstücks (6) im Durchmesser reduziert und das darauf formschlüssig aufzusteckende Ende des Teilstücks (5') im Durchmesser konstant belassen ist.

4. Fachwerkkonstruktion nach Anspruch 1,
**dadurch gekennzeichnet,**
**dass** die Teilstücke (4, 5, 5', 6) mittels einer darin ein- bzw. darauf aufsteckbaren Muffe verbunden sind.

5. Fachwerkkonstruktion nach einem der Ansprüche 1-4.
**dadurch gekennzeichnet,**
**dass** die Steckverbindung mit einer Sicherung gegen Lösen versehen ist.

6. Fachwerkkonstruktion nach Anspruch 5,
**dadurch gekennzeichnet,**
**dass** die Sicherung ein Klebstoff ist.

7. Fachwerkkonstruktion nach Anspruch 5,
**dadurch gekennzeichnet,**
**dass** die Sicherung ein Verspannelement ist.

8. Fachwerkkonstruktion nach Anspruch 7,
**dadurch gekennzeichnet,**
**dass** das Verspannelement ein Keil ist.

9. Fachwerkkonstruktion nach Anspruch 7,
**dadurch gekennzeichnet,**
**dass** das Verspannelement ein Spannring ist.

10. Fachwerkkonstruktion nach einem der Ansprüche 1-9,
**dadurch gekennzeichnet,**
**dass** die Hohlprofile von Obergurt (1), Untergurt (2) und Diagonalstreben (3, 3') aus warmgefertigten nahtlosen Rohren hergestellt sind.

11. Fachwerkkonstruktion nach einem der Ansprüche 1-9,
**dadurch gekennzeichnet,**
**dass** die Hohlprofile von Obergurt (1), Untergurt (2) und Diagonalstreben (3, 3') aus geschweißten kalt- oder warmgefertigten Rohren hergestellt sind.

## Claims

1. Framework construction having a connection arrangement of hollow sections made of steel as support elements, consisting of upper chord (1), lower chord (2) and diagonal members (3, 3'), **characterised in that** at least the diagonal members (3) consist of parts (4, 5, 5', 6) which are connected to one another by means of a joint connection and under loading are subjected to an axial compressive stress, and the joint connection of the diagonal members (3) is configured as a detachable, form-fitting plug-in connection, the parts (4, 5, 5', 6) being configured to be insertable into one another.

2. Framework construction according to Claim 1,
**characterised in that**,
for producing the plug-in connection, one end of the part (4) has an increased diameter and the end of the part (5) which is to be form-fittingly inserted into that end of the part (4) is left constant in diameter.

3. Framework construction according to Claim 2,
**characterised in that**,
for producing the plug-in connection, one end of the part (6) is reduced in diameter and the end of the part (5') which is to be form-fittingly pushed onto that end of the part (6) is left constant in diameter.

4. Framework construction according to Claim 1,
**characterised in that**
the parts (4, 5, 5', 6) are connected by means of a sleeve which is insertable into or pushable onto the parts.

5. Framework construction according to one of Claims 1-4,
**characterised in that**
the plug-in connection is provided with a safeguard against release.

6. Framework construction according to Claim 5,
**characterised in that**
the safeguard is an adhesive.

7. Framework construction according to Claim 5,
**characterised in that**
the safeguard is a clamping element.

8. Framework construction according to Claim 7,
**characterised in that**
the clamping element is a wedge.

9. Framework construction according to Claim 7,
**characterised in that**
the clamping element is a clamping ring.

10. Framework construction according to one of Claims 1-9,
**characterised in that**
the hollow sections of upper chord (1), lower chord (2) and diagonal members (3, 3') are produced from hot-finished seamless tubes.

11. Framework construction according to one of Claims 1-9,
**characterised in that**
the hollow sections of upper chord (1), lower chord (2) and diagonal members (3, 3') are produced from welded cold- or hot-finished tubes.

## Revendications

1. Construction en treillis avec dispositif pour raccorder des profilés creux en acier comme éléments portants, se composant d'une membrure supérieure (1), d'une membrure inférieure (2) et d'entretoises diagonales (3, 3'), **caractérisée en ce qu'**au moins les entretoises diagonales (3) se composent de pièces partielles (4, 5, 5', 6), qui sont assemblées les unes aux autres au moyen d'assemblages à noeuds et sont soumises en charge à une sollicitation de compression axiale et l'assemblage à noeuds des entretoises diagonales (3) est réalisé sous la forme d'un assemblage à engagement par emboîtement séparable, dans laquelle les pièces partielles (4, 5, 5', 6) sont réalisées sous forme enfichable l'une dans l'autre.

2. Construction en treillis selon la revendication 1, **caractérisée en ce que**, pour la réalisation de l'assemblage à engagement, une extrémité de la pièce partielle (4) présente un diamètre agrandi et l'extrémité de la pièce partielle (5) à engager par emboîtement dans celle-ci présente un diamètre constant.

3. Construction en treillis selon la revendication 2, **caractérisée en ce que**, pour la réalisation de l'assemblage à engagement, une extrémité de la pièce partielle (6) présente un diamètre réduit et l'extrémité de la pièce partielle (5') à engager par emboîtement sur celle-ci présente un diamètre constant.

4. Construction en treillis selon la revendication 1, **caractérisée en ce que** les pièces partielles (4, 5, 5', 6) sont assemblées au moyen d'un manchon enfichable dans ou sur celles-ci.

5. Construction en treillis selon l'une quelconque des revendications 1 à 4, **caractérisée en ce que** l'assemblage à engagement est muni d'une sécurité contre la séparation.

6. Construction en treillis selon la revendication 5, **caractérisée en ce que** la sécurité est une colle.

7. Construction en treillis selon la revendication 5, **caractérisée en ce que** la sécurité est un élément de serrage.

8. Construction en treillis selon la revendication 7, **caractérisée en ce que** l'élément de serrage est une clavette.

9. Construction en treillis selon la revendication 7, **caractérisée en ce que** l'élément de serrage est une bague de serrage.

10. Construction en treillis selon l'une quelconque des revendications 1 à 9, **caractérisée en ce que** les profilés creux de la membrure supérieure (1), de la membrure inférieure (2) et des entretoises diagonales (3, 3') sont produits à partir de tubes sans soudure fabriqués à chaud.

11. Construction en treillis selon l'une quelconque des revendications 1 à 9, **caractérisée en ce que** les profilés creux de la membrure supérieure (1), de la membrure inférieure (2) et des entretoises diagonales (3, 3') sont produits à partir de tubes soudés fabriqués à froid ou à chaud.
